# EUROPÄISCHE PATENTANMELDUNG

(11) **EP 2 937 431 A1**
(43) Veröffentlichungstag der Anmeldung: **28.10.2015**
(21) Anmeldenummer: 14166046.4
(22) Anmeldetag: 25.04.2014
(51) Int. Cl.: C21C 5/52, F27B 3/08, F27B 3/20, F27B 14/06

(54) **Verfahren und Vorrichtung zum Herstellen einer Metallschmelze**

(71) Anmelder: Siemens VAI Metals Technologies GmbH, 4031 Linz (AT)
(72) Erfinder: Kluge, Jens, 86551 Aichach (DE); Krassnig, Hans-Joerg, 4020 Linz (AT)
(74) Vertreter: Maier, Daniel Oliver

(57) **Zusammenfassung**

Die Erfindung betrifft ein Verfahren sowie eine Vorrichtung zum Herstellen einer Metallschmelze (26) aus einem Schmelzgut (20).

Gemäß dem Verfahren wird ein Teil einer zur Herstellung der Metallschmelze (26) erforderlichen Wärme durch eine Einwirkung eines elektrischen Wechselfeldes (32) auf das Schmelzgut (20) bewirkt wird und ein weiterer Teil der zur Herstellung der Metallschmelze (26) erforderlichen Wärme durch eine Einwirkung eines elektrischen Lichtbogens (28) auf das Schmelzgut (20) bewirkt wird.

Gegenstand der Erfindung ist zudem ein Schmelzofen (2) zum Herstellen einer Metallschmelze (26) aus einem Schmelzgut (20).

Der Schmelzofen (2) weist eine Induktionsvorrichtung (4) und eine Lichtbogenvorrichtung (6) auf, die jeweils zur Durchführung des erfindungsgemäßen Verfahrens vorbereitet sind.

## Beschreibung

Die Erfindung betrifft ein Verfahren zum Herstellen einer Metallschmelze aus einem Schmelzgut sowie einen Schmelzofen zum Herstellen einer Metallschmelze aus einem Schmelzgut.

Es existieren zahlreiche Verfahren zur Herstellung von Stahl. Grundsätzlich ist dabei zwischen der sogenannten Primär- und der Sekundärherstellung zu unterscheiden.

Bei der Primärherstellung, die auch als Hochofen-Konverter-Route bezeichnet wird, werden die Rohstoffe Eisenerz und Koks in einem Hochofen zunächst zu Roheisen verarbeitet. Das so gewonnene Roheisen wird anschließend üblicherweise in einem sogenannten Konverter durch eine Reaktion mit Sauerstoff zu Rohstahl reduziert.

Als Sekundärherstellung versteht man in der Regel das Einschmelzen von Schrott ggf. unter Zusatz von Roheisen und weiterer Zuschlagstoffe unter einer elektrisch bewirkten Wärmezufuhr zu wiederverwendbarem Stahl. Die Sekundärherstellung ist deshalb auch unter der Bezeichnung Elektrostahl-Route geläufig. Dabei werden vornehmlich Induktions- oder Lichtbogenöfen zum Einschmelzen des Schmelzgutes bzw. zum Herstellen der Metallschmelze verwendet.

Im Induktionsofen induziert eine elektrische Spule ein Wechselfeld im Schmelzgut. Infolgedessen entsteht die Wärme direkt im Schmelzgut wodurch Energieverluste vermieden und hohe Wirkungsgrade erzielt werden können. Dabei ist eine hinreichende induktive Ankopplung des Schmelzgutes an das Wechselfeld der Spule eine Voraussetzung für einen effektiven und effizienten Einsatz eines Induktionsofens.

Im Lichtbogenofen wird die zum Herstellen der Schmelze erforderliche Wärme über einen Lichtbogen, der zwischen einer Elektrode und dem Schmelzgut brennt, auf das Schmelzgut übertragen. Dabei können Temperaturen von bis zu 3500°C erreicht werden.

Vor diesem Hintergrund ist die sogenannte Direktreduktion von Eisenerz ein etabliertes Teilverfahren in der Stahlproduktion. Sein Einsatz ist insbesondere dann vorteilhaft, wenn die angestrebten Produktionsmengen zu gering sind, um die vergleichsweise hohen Aufwendungen für den Aufbau und Unterhalt einer Hochofen-Konverter-Route zu rechtfertigen.

Dabei wird das Eisenerz in festem Zustand, beispielsweise unter Einwirkung eines wasserstoffreichen Gases, zu Eisenschwamm reduziert. Das so gewonnene Produkt ist schwammartigporös und weist einen vergleichsweise hohen Eisengehalt von 92% bis 95% auf. Eisenschwamm eignet sich insbesondere zur Weiterverarbeitung zu Stahl in bzw. mit Mitteln der Elektrostahl-Route.

Dabei ist das Herstellen einer Metallschmelze aus einem Schmelzgut mit Anteilen von Eisenschwamm nicht unproblematisch.

Aus dem Stand der Technik ist ein Verfahren bekannt bei dem eine Metallschmelze aus einem Schmelzgut, das mindesten 10% Schrott, mindestens 10% Roheisen und maximal 80% Eisenschwamm enthält, hergestellt wird. Dabei werden zunächst das Roheisen und der Schrott in einem Induktionsofen aufgeschmolzen. Zu diesem Zeitpunkt wird vorzugweise noch kein Eisenschwamm zugegeben. Grund hierfür ist die mangelnde induktive Ankopplung des Eisenschwamms an das Magnetfeld des Induktionsofens. Diese würde ein Aufschmelzen des Eisenschwamms allein unter Einwirkung der Induktion zumindest erschweren. Stattdessen wird der Eisenschwamm chargenweise zu dem zumindest teilweise geschmolzenen Roheisen und Schrott hinzugegeben und durch den Kontakt mit dem heißen Schmelzgut seinerseits zum Schmelzen gebracht. Die dabei aus der Gangart (Begleitmineralien) des Eisenschwamms entstehende Schlacke lagert sich als harte, krustige Schicht auf dem Schmelzgut ab. Vor der Zugabe einer weiteren Charge des Eisenschwamms muss die Schlacke deshalb aufwändig mit einem sogenannten Schlackenbagger oder manuell entfernt werden. Da sich die Schlacke in einem zumindest teilweise nicht-flüssigen Zustand befindet, kann keine metallurgische Schlackenarbeit erfolgen.

Es ist eine Aufgabe der Erfindung ein vorteilhaftes Verfahren sowie eine Vorrichtung zum Herstellen einer Metallschmelze aus einem Schmelzgut vorzuschlagen, die die aus dem Stand der Technik bekannten Nachteile überwinden. Insbesondere ist es eine Aufgabe der Erfindung ein aufwandsgünstiges und flexibles Verfahren zum Herstellen einer Metallschmelze aus einem Schmelzgut anzugeben.

Diese Aufgabe wird erfindungsgemäß gelöst mit einem Verfahren zum Herstellen einer Metallschmelze aus einem Schmelzgut und einem Schmelzofen zum Herstellen einer Metallschmelze aus einem Schmelzgut.

Bei dem Verfahren wird ein Teil einer zur Herstellung der Metallschmelze erforderlichen Wärme durch eine Einwirkung eines elektrischen Wechselfeldes auf das Schmelzgut bewirkt.

Unter Schmelzgut im Sinne der vorliegenden Erfindung ist ein aufzuschmelzendes und/oder aufschmelzendes metallhaltiges Gut zu verstehen. Das Schmelzgut kann eine feste Phase, eine Übergangsphase, sowie eine flüssige Phase aufweisen. Es kann vollständig fest, teilweise fest bzw. teilweise flüssig (aufgeschmolzen) oder vollständig flüssig (aufgeschmolzen) sein. Insbesondere kann das Schmelzgut heterogen sein, d.h. verschiedenartige Anteile an metallhaltigen Stoffen mit jeweils verschiedenartigen physikalischen und verfahrenstechnischen Eigenschaften beinhalten.

Insbesondere solche Anteile des Schmelzgutes, welche eine hinreichend hohe Induktivität aufweisen, wie beispielsweise Stahlschrott, können durch die Einwirkung des elektrischen Wechselfeldes vorteilhaft aufgeschmolzen werden. Induktionsbedingt wird ein Teil der zur Herstellung der Metallschmelze erforderliche Wärme direkt, also unter Umgehung von Wärmeleitung und Wärmestrahlung, im Schmelzgut induziert. Auf diese Weise kann ein besonders energieeffizientes und damit aufwandsgünstiges Erwärmen/Schmelzen des Schmelzgutes erreicht werden.

Ein weiterer Teil der zur Herstellung der Metallschmelze erforderlichen Wärme wird durch eine Einwirkung eines elektrischen Lichtbogens auf das Schmelzgut bewirkt.

Durch die Einwirkung des Lichtbogens wird ein Teil der erforderlichen Wärme insbesondere durch Wärmestrahlung auf das Schmelzgut übertragen. Insbesondere solche Anteile des Schmelzgutes, welche eine niedrige bzw. nicht hinreichend hohe Induktivität aufweisen, wie beispielsweise Eisenschwamm, können durch die Einwirkung des elektrischen Lichtbogens vorteilhaft aufgeschmolzen werden.

Vereinfacht ausgedrückt geht die Erfindung von der Überlegung aus, einen Lichtbogenofenprozess und einen Induktionsofenprozess zur Herstellung einer Metallschmelze in einem Verfahren zu kombinieren.

Auf diese Weise kann die Herstellung der Metallschmelze besonders flexibel, d.h. an das jeweilige Schmelzgut anpassbar, erfolgen. Insbesondere kann das Verfahren an die jeweils vorherrschenden verschiedenartigen physikalischen (Induktivität etc.) und verfahrenstechnischen (Schmelzpunkte etc.) Eigenschaften von heterogenem Schmelzgut angepasst werden. Schwankungen der anteilsmäßigen Zusammensetzung des Schmelzgutes können durch eine anteilsmäßige Anpassung der jeweils durch das Wechselfeld bzw. den Lichtbogen bewirkten Wärmemenge berücksichtigt werden. Beispielsweise kann bei einem überwiegenden Anteil von hinreichend induktivem Schmelzgut ein überwiegender Teil der zur Herstellung der Metallschmelze erforderlichen Wärme durch die Einwirkung eines elektrischen Wechselfeldes bewirkt werden. Bei einem überwiegenden Anteil von nicht hinreichend induktivem Schmelzgut kann ein überwiegender Teil der zur Herstellung der Metallschmelze erforderlichen Wärme durch die Einwirkung des elektrischen Lichtbogens bewirkt werden. Die verfahrenstechnischen Toleranzen bezüglich einer Schmelzgutzusammensetzung können so reduziert werden, wodurch sich Aufwandseinsparungen erreichen lassen.

Gegenstand der Erfindung ist außerdem ein Schmelzofen.

Der Schmelzofen weist eine Induktionsvorrichtung und eine Lichtbogenvorrichtung auf.

Die Induktionsvorrichtung ist derart eingerichtet, dass ein Teil einer zur Herstellung der Metallschmelze erforderlichen Wärme durch eine Einwirkung eines elektrischen Wechselfeldes auf das Schmelzgut bewirkbar ist.

Die Induktionsvorrichtung kann eine elektrische Spule, welche vorzugsweise wassergekühlt sein kann, aufweisen. Die Spule kann zum Anschluss an eine Wechselstromquelle vorbereitet sein.

Die Lichtbogenvorrichtung ist derart eingerichtet, dass ein weiterer Teil der zur Herstellung der Metallschmelze erforderlichen Wärme durch eine Einwirkung eines elektrischen Lichtbogens auf das Schmelzgut bewirkbar ist.

Die Lichtbogenvorrichtung kann zum Betrieb mit Gleichstrom oder mit Wechselstrom vorbereitet sein.

Bevorzugte Weiterbildungen der Erfindung ergeben sich auch aus den abhängigen Ansprüchen. Die Weiterbildungen beziehen sich sowohl auf das erfindungsgemäße Verfahren wie auch auf die erfindungsgemäße Anordnung.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

In einer vorteilhaften Ausgestaltung wird zumindest ein Teil einer Schlackenschicht, welche zumindest teilweise das Schmelzgut bedeckt, von der durch den elektrischen Lichtbogen bewirkten Wärme in einen flüssigen Zustand versetzt oder in einem flüssigen Zustand erhalten.

Die Schlackenschicht kann aus einer Gangart, also auch Begleitmineralien, des Schmelzgutes bestehen.

Da die Schlackenschicht in einen flüssigen Zustand versetzt bzw. in einem flüssigen Zustand erhalten wird, ist es möglich, eine sogenannte metallurgische Schlackenarbeit durchzuführen, wodurch eine im Vergleich zu einem reinen Induktionsprozess gesteigerte Flexibilität erreicht werden kann. Da die Schlacke nicht fest ist, können weitere Chargen von Schmelzgut beigefügt werden, ohne dass die Schlacke zuvor aufwändig, beispielsweise mit einem Schlackenbagger, entfernt werden muss. Infolgedessen können reduzierte Chargierzeiten und eine gesteigerte Produktivität erreicht werden.

Vorteilhafterweise wird die Schlackenschicht in flüssigem Zustand von dem Schmelzgut entfernt.

So kann die nicht feste Schlackenschicht mit einfachen Mitteln, beispielsweise durch eine Ableitung oder ein Abgießen, aufwandsgünstig von der Metallschmelze entfernt werden. Auf eine üblicherweise kostenintensive Entfernung der Schlacke mittels eines Schlackenbaggers oder durch manuellen Personaleingriff kann somit verzichtet werden.

In der Praxis hat es sich bewährt, das Verfahren zur Herstellung einer Stahlschmelze zu verwenden.

In der Praxis hat es sich besonders bewährt die Stahlschmelze aus einem eisenschwammhaltigen Schmelzgut, welches massenanteilig zwischen 25% und 85% Eisenschwamm beinhaltet, herzustellen.

Da Eisenschwamm eine vergleichsweise geringe Induktivität, insbesondere im Vergleich zu Stahlschrott oder Roheisen, aufweist, kann die Stahlschmelze besonders vorteilhaft unter kombinierter Einwirkung des elektrischen Lichtbogens und des elektrischen Wechselfeldes herstellt werden. Dabei kann bei einem niedrigen Massenanteil (bspw. 25%) von Eisenschwamm an der Gesamtmasse des Schmelzgutes ein entsprechend geringer Teil der erforderlichen Wärme durch den elektrischen Lichtbogen bewirkt werden. Bei einem hohen Massenanteil (bspw. 85%) von Eisenschwamm an der Gesamtmasse des Schmelzgutes kann ein dementsprechend hoher Teil der erforderlichen Wärme durch den elektrischen Lichtbogen bewirkt werden. Auf diese Weise lässt sich ein besonders flexibler Rohstoffeinsatz erreichen.

In einer vorteilhaften Ausführungsform wird die zur Herstellung der Metallschmelze erforderliche Wärme zu zwischen 5% und 75%, vorzugsweise zu zwischen 10% - 50% durch Einwirkung des elektrischen Lichtbogens bewirkt.

Infolgedessen ist die Herstellung der Metallschmelze besonders flexibel an die jeweiligen Massenanteile der Schmelzgutanteile anpassbar. Insbesondere kann der elektrische Lichtbogen in seiner Wärmeleistung reduziert werden, wenn ein hinreichender Anteil des Schmelzgutes eine hinreichend hohe Induktivität besitzt um alleine unter Einwirkung des Wechselstromfeldes aufgeschmolzen zu werden.

In einer vorteilhaften Weiterbildung wird eine Position des elektrischen Lichtbogens angepasst.

Die Position des Lichtbogens kann sich auf eine relative Anordnung des Lichtbogens gegenüber dem Schmelzgut beziehen.

Durch die Anpassung der Position, die beispielsweise translatorisch und/oder rotatorisch erfolgen kann, kann die Einwirkung des Lichtbogens, bzw. der Strahlungswärme, auf das Schmelzgut ein einfacher Weise reguliert werden.

Gemäß einer Ausgestaltung wird die Position des elektrischen Lichtbogens unter Verwendung eines Pegelstandes der Metallschmelze angepasst.

Unter einem Pegelstand im Sinne der vorliegenden Erfindung ist ein Füllstand bzw. eine Füllhöhe des Schmelzgutes in einem Tiegelgefäß, das beispielsweise Teil eines Schmelzofens sein kann, zu verstehen. Üblicherweise steigt der Pegelstand im Zeitverlauf des Verfahrens durch die Zugabe weiterer Chargen an Schmelzgut. Durch die Anpassung der Position des elektrischen Lichtbogens unter Verwendung dieses, vorzugsweise aktuellen, Pegelstandes kann diesem Umstand auf einfache Weise Rechnung getragen werden. Die Länge des Lichtbogens, und damit die übertragbare Strahlungswärme, kann so auf einfache Weise angepasst werden.

In einer weiteren Weiterbildung wird die Position des elektrischen Lichtbogens in Abhängigkeit einer Pegelbewegung der Metallschmelze geregelt.

Durch diese Regelung kann eine besonders komfortable Anpassung der Position des elektrischen Lichtbogens realisiert werden. Beispielsweise kann sich der Lichtbogen so automatisch mit dem Aufbau des Schmelzgutes in vertikaler Richtung nach oben bewegen.

Gemäß einer bevorzugten Weiterbildung wird der elektrische Lichtbogen durch eine Gleichspannung bewirkt.

Auf diese Weise kann erreicht werden, dass der Lichtbogen direkt in der Schlackenschicht zum Liegen kommt, wodurch ein effektives Erhitzen der Schlacke unter Vermeidung von Abstrahlungsverlusten erreicht wird.

In einer vorteilhaften Weiterbildung weist die Lichtbogenvorrichtung des Schmelzofens eine Elektrode, eine Anode und eine Positioniervorrichtung auf.

Vorteilhafterweise ist die Anode im Boden eines Tiegelgefäßes des Schmelzofens angeordnet.

Die Anode kann zur Funktion als Stromankopplung vorbereitet sein.

In einer Ausgestaltung ist die Positioniervorrichtung zu einer Bewegung der Elektrode, vorzugweise parallel zu einer Pegelbewegung des Schmelzgutes, vorbereitet.

In einer Weiterbildung weist der Schmelzofen eine Regeleinheit auf.

Die Regeleinheit ist zu einer Ansteuerung der Positioniervorrichtung in Abhängigkeit der Pegelbewegung des Schmelzgutes eingerichtet.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren sowie der erfindungsgemäßen Anordnung gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigt:

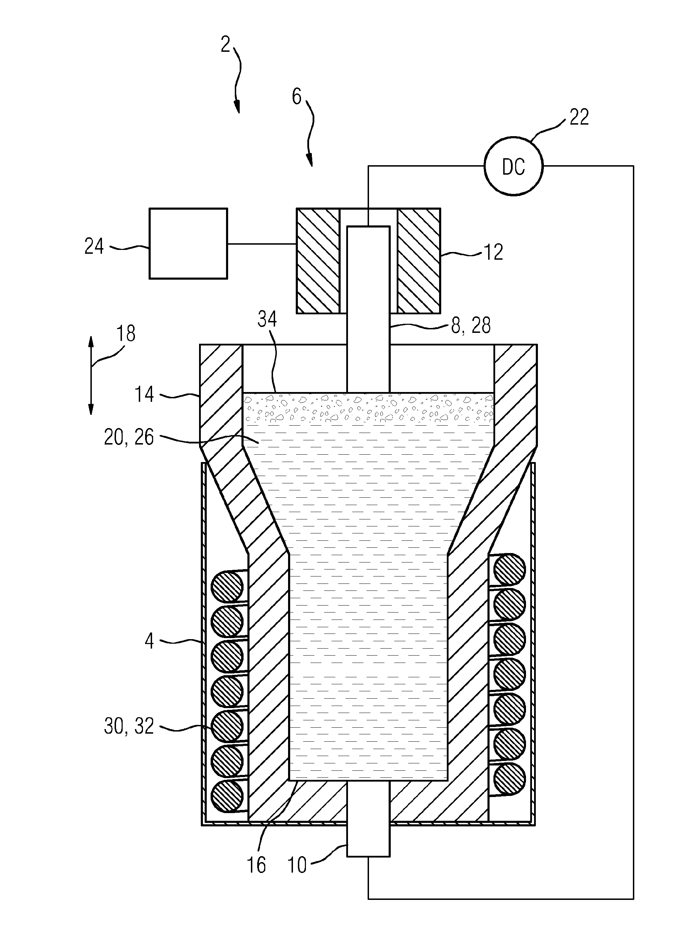

- FIG 1: eine schematische Darstellung eines Schmelzofens mit einer Induktionsvorrichtung und einer Lichtbogenvorrichtung.

FIG 1 zeigt eine schematische Darstellung eines Schmelzofens 2 mit einer Induktionsvorrichtung 4 und einer Lichtbogenvorrichtung 6.

Die Lichtbogenvorrichtung 6 weist eine Elektrode 8, eine Anode 10 und eine Positioniervorrichtung 12 auf. Die Elektrode 8 ist zumindest teilweise oberhalb eines Tiegelgefäßes 14 angeordnet. Die Anode 10 ist in einem Boden 16 des Tiegelgefäßes 14 angeordnet.

Die Positioniervorrichtung 12 ist zu einer Bewegung der Elektrode 8, vorzugsweise parallel zu einer Pegelbewegung 18 eines Schmelzgutes 20, vorbereitet. Die Elektrode 8 und die Anode 10 sind elektrisch leitend an eine Gleichstromquelle 22 angeschlossen.

Zudem weist der Schmelzofen 2 eine Regeleinheit 24 auf. Die Regeleinheit 24 ist zu einer Ansteuerung der Positioniervorrichtung 12 in Abhängigkeit der Pegelbewegung 18 des Schmelzgutes 20 vorbereitet.

Die Lichtbogenvorrichtung 6 ist derart eingerichtet, dass ein Teil einer zur Herstellung einer Metallschmelze 26 erforderlichen Wärme durch eine Einwirkung eines elektrischen Lichtbogens 28 auf das Schmelzgut 20 bewirkbar ist.

Die Induktionsvorrichtung 4 weist eine Spule 30 auf. Die Spule 30 ist als elektrischer Leiter ausgeführt, welcher sich spiralförmig über einen Teil der Höhe des Tiegelgefäßes 14 auf dessen dem Schmelzgut 20 abgewandter Seite erstreckt.

Die Induktionsvorrichtung 4 ist derart eingerichtet, dass ein Teil der zur Herstellung der Metallschmelze 26 erforderlichen Wärme durch eine Einwirkung eines elektrischen Wechselfeldes 32 auf das Schmelzgut 20 bewirkbar ist.

Zur Herstellung einer Metallschmelze 26 wird das Schmelzgut 20, typischerweise in einer ersten Charge, in das Tiegelgefäß 14 des Schmelzofens 2 eingebracht. Das Schmelzgut 20 kann beispielsweise heterogen sein und Roheisen und/oder Eisenschwamm und/oder Stahlschrott und/oder weitere Zuschlagsstoffe beinhalten.

Das Schmelzgut 20 wird durch die Induktionsvorrichtung 4 und/oder die Lichtbogenvorrichtung 6 erhitzt bzw. aufgeschmolzen. Dabei wird zumindest ein Teil der hierfür erforderlichen Wärme durch das von der Induktionsvorrichtung 4 bewirkte Wechselfeld 32 direkt im Schmelzgut 20 induziert. Ein weiterer Teil der Wärme kann durch den von der Lichtbogenvorrichtung 6 generierten elektrischen Lichtbogen 28 auf das Schmelzgut 20 bzw. die Metallschmelze 26 übertragen werden.

Dabei kann die anteilige Wärmeeinbringung durch die Induktionsvorrichtung 4 und die Lichtbogenvorrichtung 6 in Abhängigkeit von der Zusammensetzung bzw. den physikalischen und/oder verfahrenstechnischen Eigenschaften des Schmelzgutes 20 erfolgen. Bei einem Schmelzgut 20 mit überwiegend niedriginduktiven Anteilen, beispielsweise in Folge eines überwiegenden Anteils an Eisenschwamm, kann der überwiegende Teil der Wärme durch die Lichtbogenvorrichtung 6 bzw. den Lichtbogen 28 bewirkt werden. Bei einem Schmelzgut 20 mit überwiegend induktiven Anteilen, beispielsweise in Folge eines überwiegenden Anteils an Stahlschrott, kann der überwiegende Teil der Wärme durch die Induktionsvorrichtung 4 bzw. das Wechselfeld 32 bewirkt werden.

Während des Schmelzens des Schmelzgutes 20 bildet sich aus der sogenannten Gangart des Schmelzgutes 20 - dies sind nicht-metallische Begleitmineralien - eine Schlackenschicht 34. Die Schlackenschicht 34 bedeckt das Schmelzgut 20 zumindest teilweise.

Der durch die Lichtbogenvorrichtung 6 bewirkte Lichtbogen 28 erhält bzw. versetzt die Schlackenschicht 34 in einem flüssigen Zustand.

Eine weitere Charge des Schmelzgutes 20 kann vorteilhafterweise durch die flüssige Schlackenschicht 34 in das Tiegelgefäß 14 zugeführt werden. Die Schlackenschicht 34 kann in flüssigem Zustand von dem Schmelzgut 20 entfernt werden und/oder zur Durchführung metallurgischer Schlackenarbeit verwendet werden.

Die Position der Elektrode 8 bzw. der elektrischen Lichtbogens 28 kann unter Verwendung eines Pegelstandes oder der Pegelbewegung 18 der Metallschmelze 26 bzw. des Schmelzgutes 20 durch eine Ansteuerung der Positioniervorrichtung 12 durch die Regeleinheit 24 angepasst werden. Alternativ kann die Position der Elektrode 8 auch in Abhängigkeit der Position der Schlackenschicht 34 angepasst werden.

## Patentansprüche

1. Verfahren zum Herstellen einer Metallschmelze (26) aus einem Schmelzgut (20)
**dadurch gekennzeichnet, dass**
- ein Teil einer zur Herstellung der Metallschmelze (26) erforderlichen Wärme durch eine Einwirkung eines elektrischen Wechselfeldes (32) auf das Schmelzgut (20) bewirkt wird und
- ein weiterer Teil der zur Herstellung der Metallschmelze (26) erforderlichen Wärme durch eine Einwirkung eines elektrischen Lichtbogens (28) auf das Schmelzgut (20) bewirkt wird.

2. Verfahren nach Anspruch 1,
**dadurch gekennzeichnet, dass** zumindest ein Teil einer Schlackenschicht (34), welche zumindest teilweise das Schmelzgut (20) bedeckt, von der durch den elektrischen Lichtbogen (28) bewirkten Wärme in einen flüssigen Zustand versetzt wird oder in einem flüssigen Zustand erhalten wird.

3. Verfahren nach Anspruch 2,
**dadurch gekennzeichnet, dass** die Schlackenschicht (34) in flüssigem Zustand von dem Schmelzgut (20) entfernt wird.

4. Verfahren nach einem der vorangegangenen Ansprüche verwendet zur Herstellung einer Stahlschmelze.

5. Verfahren nach Anspruch 4,
**dadurch gekennzeichnet, dass** die Stahlschmelze aus einem eisenschwammhaltigen Schmelzgut (20), welches massenanteilig zwischen 25% und 85% Eisenschwamm beinhaltet, hergestellt wird.

6. Verfahren nach einem der vorangegangenen Ansprüche,
**dadurch gekennzeichnet, dass** die zur Herstellung der Metallschmelze (26) erforderliche Wärme zu zwischen 5% und 75%, vorzugsweise zu zwischen 10% - 50% durch Einwirkung des elektrischen Lichtbogens (28) bewirkt wird.

7. Verfahren nach einem der vorangegangenen Ansprüche,
**dadurch gekennzeichnet, dass** eine Position des elektrischen Lichtbogens (28) angepasst wird.

8. Verfahren nach Anspruch 7,
**dadurch gekennzeichnet, dass** die Position des elektrischen Lichtbogens (28) unter Verwendung eines Pegelstandes der Metallschmelze (26) angepasst wird.

9. Verfahren nach einem der Ansprüche 7 bis 8,
**dadurch gekennzeichnet, dass** die Position des elektrischen Lichtbogens (28) in Abhängigkeit einer Pegelbewegung (18) der Metallschmelze (26) geregelt wird.

10. Verfahren nach einem der vorangegangenen Ansprüche,
**dadurch gekennzeichnet, dass** der elektrische Lichtbogen (28) durch eine Gleichspannung (22) bewirkt wird.

11. Schmelzofen (2) zum Herstellen einer Metallschmelze (26) aus einem Schmelzgut (20)
**gekennzeichnet durch**
- eine Induktionsvorrichtung (4), derart eingerichtet, dass ein Teil einer zur Herstellung der Metallschmelze (26) erforderlichen Wärme **durch** eine Einwirkung eines elektrischen Wechselfeldes (32) auf das Schmelzgut (20) bewirkbar ist und
- eine Lichtbogenvorrichtung (6), derart eingerichtet, dass ein weiterer Teil der zur Herstellung der Metallschmelze (26) erforderlichen Wärme **durch** eine Einwirkung eines elektrischen Lichtbogens (28) auf das Schmelzgut (20) bewirkbar ist.

12. Schmelzofen (2) nach Anspruch 11,
**dadurch gekennzeichnet, dass** die Lichtbogenvorrichtung (6) eine Elektrode (8), eine Anode (10) und eine Positioniervorrichtung (12) aufweist.

13. Schmelzofen (2) nach Anspruch 12,
**dadurch gekennzeichnet, dass** die Anode (10) im Boden (16) eines Tiegelgefäßes (14) des Schmelzofens (2) angeordnet ist.

14. Schmelzofen (2) nach Anspruch 12,
**dadurch gekennzeichnet, dass** die Positioniervorrichtung (12) zu einer Bewegung der Elektrode (8), vorzugweise parallel zu einer Pegelbewegung (18) des Schmelzgutes (20), vorbereitet ist.

15. Schmelzofen (2) nach Anspruch 14,
**gekennzeichnet durch** eine Regeleinheit (24), eingerichtet zu einer Ansteuerung der Positioniervorrichtung (12) in Abhängigkeit der Pegelbewegung (18) des Schmelzgutes (20).
